(19) **Europäisches Patentamt European Patent Office Office européen des brevets**

(11) **EP 4 693 584 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
**H01M 10/0587** (2010.01)

(21) Application number: **23929505.8**

(52) Cooperative Patent Classification (CPC):
**H01M 10/0587;** Y02E 60/10; Y02P 70/50

(22) Date of filing: **31.03.2023**

(86) International application number:
**PCT/CN2023/085758**

(87) International publication number:
**WO 2024/197922 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited Ningde, Fujian 352100 (CN)**

(72) Inventor: **YANG, Dongzi Ningde, Fujian 352100 (CN)**

(74) Representative: **Icosa 83 avenue Denfert-Rochereau 75014 Paris (FR)**

(54) **SECONDARY BATTERY AND ELECTRONIC APPARATUS**

(57)      A secondary battery (100) includes an electrode assembly (10), a structural component (20), and a packaging bag (30). The electrode assembly (10) is bent in a first direction. The electrode assembly (10) includes m electrode units, where m is an integer greater than or equal to 1. Each of the electrode units includes a first wall (111) and a second wall (112) sequentially disposed in the first direction. Both the first wall (111) and the second wall (112) are bent in the first direction. The structural component (20) is bent in the first direction. The structural component (20) is fixed to the electrode assembly (10). The structural component (20) is in contact with at least one of the first wall (111) or the second wall (112) of the electrode unit. The packaging bag (30) is configured to accommodate the electrode assembly (10) and the structural component (20). In this application, a force generated by a flattening tendency of a bent electrode unit (11) is transmitted to the structural component (20) through the packaging bag (30). The structural component (20) offsets at least a part of the force transmitted by the packaging bag (30), thereby suppressing deformation of the electrode unit.

FIG. 2

## Description

### TECHNICAL FIELD

This application relates to the technical field of energy storage, and in particular, to a secondary battery and an electronic device.

### BACKGROUND

Currently, to suit electronic devices of various shapes, the shapes of batteries also change accordingly with the shapes of the electronic devices. For example, a battery applied to an arcuate electronic device is designed as an arcuate battery accordingly. However, the arcuate battery incurs a problem of deformation caused by curvature reduction, flattening, and the like. Therefore, there is an urgent need for a secondary battery that can alleviate the problems such as curvature reduction and flattening.

### SUMMARY

**In** view of the above situation, this application provides a secondary battery capable of suppressing deformation of an electrode unit.

Some embodiments of this application provide a secondary battery. The secondary battery includes an electrode assembly, a structural component, and a packaging bag. The electrode assembly is bent in a first direction. The electrode assembly includes m electrode units, where m is an integer greater than or equal to 1. Each of the electrode units includes a first wall and a second wall sequentially disposed in the first direction. Both the first wall and the second wall are bent in the first direction. The structural component is bent in the first direction. The structural component is fixed to the electrode assembly. The structural component is disposed on at least one of the first wall or the second wall of the electrode unit. The packaging bag is configured to accommodate the electrode assembly and the structural component. The number of the structural components is n, and n is an integer greater than or equal to 1. The electrode assembly and the structural component satisfy the following formula:

$$\sigma_1 \frac{B_1 \times H_1^2}{L_1} + \sigma_2 \frac{B_2 \times H_2^2}{L_2} + \cdots + \sigma_n \frac{B_n \times H_n^2}{L_n} > \frac{2}{145} \left[ \frac{W_1 \times D_1^2}{C_1} + \frac{W_2 \times D_2^2}{C_2} + \cdots + \frac{W_m \times D_m^2}{C_m} \right]$$

In the formula above, $W_m$ represents a width of an $m^{th}$ electrode unit in a second direction perpendicular to the first direction, $C_m$ represents a length by which the $m^{th}$ electrode unit extends curvilinearly when viewed along the second direction, and $D_m$ represents a thickness of the $m^{th}$ electrode unit in the first direction; $B_n$ represents a width of an $n^{th}$ structural component in the second direction, $L_n$ represents a length by which the $n^{th}$ structural component extends curvilinearly when viewed along the second direction, and $H_n$ represents a thickness of the $n^{th}$ structural component in the first direction; and $\sigma_n$ represents bend strength of the $n^{th}$ structural component.

The above bent structural component is fixed to the electrode unit of the electrode assembly, thereby offsetting at least a part of the force generated by a deformation tendency of the electrode unit such as a curvature reduction tendency or a flattening tendency. In addition, the force generated by the deformation of the electrode unit is transmitted to the structural component through the packaging bag. The structural component offsets at least a part of the force transmitted from the packaging bag, thereby playing a role in suppressing the deformation of the electrode unit. When the above formula is satisfied, the curvature radius change rate of the electrode unit is caused to be less than 4%, thereby reducing the risk of lithium plating of the electrode assembly, reducing the space required to be reserved in a battery compartment configured to accommodate the secondary battery, facilitating the use of a fixture in a production process, facilitating the production and mounting of the secondary battery, and improving the reliability and applicability of the secondary battery.

In some embodiments, the electrode assembly exhibits a first width T along the second direction and a first length P by which the electrode assembly extends curvilinearly when viewed along the second direction, satisfying: $2/3 \times T \le B_n \le T$, and $2/3 \times P \le L_n \le P$.

The above arrangement reduces the space occupied by the structural component, and can make the structural component not extend beyond the electrode assembly in the second direction and in the bending direction of the electrode assembly when viewed along the second direction, thereby making the structural component not occupy the space of the secondary battery in the second direction and in the bending direction of the electrode assembly when viewed along the second direction. When one structural component is provided and connected to one electrode unit, the above arrangement increases the area available for contact and connection between the electrode unit and the structural component, thereby reducing the risk of poor connection phenomena such as a reduced connection area and detachment between the structural component and the electrode unit. In addition, by increasing the length and width of the structural component, this application improves the ability of the structural component to suppress deformation of the electrode unit.

In some embodiments, the secondary battery further includes a first adhesive layer. The structural component is fixed to the electrode assembly by the first adhesive layer.

The first adhesive layer improves the tightness of fixing the structural component to the electrode assembly, and improves the ability of the structural component to suppress the deformation of the electrode unit.

In some embodiments, m = 1, n = 1, and the structural component is disposed on the second wall of the electrode unit.

The bent structural component is connected and coupled to the second wall of the electrode unit, thereby directly offsetting at least a part of the force generated by the deformation tendency of the electrode unit, and in turn, suppressing the deformation of the electrode unit. The second wall is a concave wall. When the structural component is disposed on the second wall, a protection structure can be added between the electrode unit and the human body, thereby reducing the risk of injury to the human body when the electrode unit is damaged, and further improving the reliability of the secondary battery.

In some embodiments, the packaging bag includes a third wall and a fourth wall sequentially disposed in the first direction. The third wall is at least partially in contact with the first wall, and the fourth wall is at least partially in contact with the structural component.

The third wall is at least partially in contact with the first wall, and the fourth wall is at least partially in contact with the structural component, so that the third wall and the fourth wall of the packaging bag are in direct contact with the electrode unit and the structural component. In this way, the force generated by the deformation tendency of the electrode unit is facilitated to be directly transmitted to the structural component through the packaging bag, thereby making it convenient for the structural component to offset the force generated by the electrode unit, and in turn, improving the effect of the structural component in suppressing the deformation of the electrode unit.

In some embodiments, the secondary battery further includes a second adhesive layer. The packaging bag includes a third wall and a fourth wall sequentially disposed in the first direction. The third wall is at least partially in contact with the first wall, and the fourth wall is bonded to the structural component by the second adhesive layer.

The third wall is at least partially in contact with the first wall, so that the third wall of the packaging bag is in direct contact with the electrode unit and the structural component. In this way, the force generated by the deformation tendency of the electrode unit is facilitated to be directly transmitted to the structural component through the packaging bag, thereby making it convenient for the structural component to offset the force generated by the electrode unit, and in turn, improving the effect of the structural component in suppressing the deformation of the electrode unit. The fourth wall is bonded to the structural component by the second adhesive layer, thereby improving the tightness of the bonding between the fourth wall and the structural component as well as the anti-drop performance, and reducing mutual movement and friction between the structural component and the packaging bag.

In some embodiments, the packaging bag is made of a material that is at least one of an aluminum laminated film or a steel laminated film.

In some embodiments, the packaging bag includes a third wall and a fourth wall sequentially disposed in the first direction. Both the third wall and the fourth wall bend in the first direction. The third wall is made of an aluminum laminated film, and the fourth wall is made of a steel laminated film.

The bend strength of the steel laminated film is greater than that of the aluminum laminated film. The fourth wall that is in contact with the structural component is made of steel laminated film. When the force generated by the deformation tendency of the electrode unit is transmitted to the third wall made of the aluminum laminated film, the third wall transmits the force to the fourth wall made of the steel laminated film. The bend strength of the fourth wall made of the steel laminated film is greater than that of the third wall made of the aluminum laminated film, thereby being able to offset at least a part of the force transmitted by the third wall. In this way, the fourth wall can play a role in suppressing the deformation of the electrode unit, thereby reducing the thickness of the structural component in the first direction, and increasing the energy density of the secondary battery.

In some embodiments, the electrode unit includes a first electrode plate, a second electrode plate, and a separator disposed between the first electrode plate and the second electrode plate. The first electrode plate, the separator, and the second electrode plate are stacked to form a stacked structure; or, the first electrode plate, the separator, and the second electrode plate are stacked and wound to form a jelly-roll structure.

In some embodiments, m is greater than 1, and the m electrode units are arranged along a direction in which the electrode units extend curvilinearly when viewed along the second direction. The n structural components are in contact with and connected to second walls of the m electrode units.

The arrangement of the electrode units makes it convenient to directly connect tabs of the plurality of electrode units inside the packaging bag, thereby increasing the energy density of the secondary battery.

In some embodiments, m is greater than 1, the m electrode units are stacked along the first direction, and at least one structural component is provided in contact with and connected to the second wall of each of the electrode units.

The arrangement of the electrode units makes it convenient to directly connect tabs of the plurality of electrode units inside the packaging bag, thereby increasing the energy density of the secondary battery.

**In** some embodiments, the structural component is made of a material that is one or more of stainless steel, shape memory alloy, polymethyl methacrylate, or polypropylene.

The above material improves the bend strength of the structural component, thereby helping the structural component offset the force generated by the deformation tendency of the electrode unit.

**In** some embodiments, in the first direction, a projection of the structural component lies within a projection of the electrode assembly.

The projection of the structural component lies within the projection of the electrode assembly, so that an additional space is available in the packaging bag for accommodating an electrolyte solution, thereby enhancing the cycle performance of the secondary battery.

In addition, this application further provides an electronic device that may improve reliability.

Some embodiments of this application provide an electronic device. The electronic device includes the secondary battery disclosed in any one of the above embodiments.

The secondary battery of the electronic device improves the ability to suppress deformation of the electrode unit, thereby reducing the deformation of the secondary battery, reducing the risk of lithium plating in the secondary battery, and improving the processing efficiency of the secondary battery. This improves the reliability of the electronic device containing the secondary battery, and improves the production efficiency of the electronic device.

The secondary battery of this application includes an electrode assembly, a structural component, and a packaging bag. The electrode assembly and the structural component are bent in a first direction. Each electrode unit of the electrode assembly includes a first wall and a second wall sequentially disposed in the first direction. The structural component is fixed to the electrode assembly. The structural component is disposed on at least one of the first wall or the second wall. The packaging bag is configured to accommodate the electrode assembly and the structural component. The bent structural component is in contact with and connected to the electrode unit, thereby offsetting at least a part of the force generated by a deformation tendency of the electrode unit such as a curvature reduction tendency or a flattening tendency. In addition, the force generated by the deformation of the electrode unit is transmitted to the structural component through the packaging bag. The structural component offsets at least a part of the force transmitted from the packaging bag, thereby playing a role in suppressing the deformation of the electrode unit. This reduces the risk of lithium plating of the electrode assembly, reduces the space required to be reserved in a battery compartment configured to accommodate the secondary battery, and facilitates the use of a fixture in a production process, thereby facilitating the production and mounting of the secondary battery, and improving the reliability and applicability of the secondary battery.

**BRIEF DESCRIPTION OF DRAWINGS**

FIG. 1 is a schematic structural diagram of a secondary battery according to an embodiment of this application;
FIG. 2 is a cross-sectional schematic view of the secondary battery shown in FIG. 1 sectioned along a section line A-A;
FIG. 3 is a schematic structural diagram of a secondary battery according to an embodiment of this application;
FIG. 4 is a cross-sectional schematic view of the secondary battery shown in FIG. 3 sectioned along a section line B-B;
FIG. 5 is a cross-sectional schematic view of a secondary battery according to an embodiment of this application;
FIG. 6 is a cross-sectional schematic view of a secondary battery according to an embodiment of this application;
FIG. 7 is a cross-sectional schematic view of a secondary battery according to an embodiment of this application;
FIG. 8 is a top view of a secondary battery according to an embodiment of this application;
FIG. 9 is a schematic structural diagram of a secondary battery according to a comparative embodiment of this application;
FIG. 10 is a cross-sectional schematic view of the secondary battery shown in FIG. 9 sectioned along a section line C-C; and
FIG. 11 is a schematic diagram of an electronic device according to an embodiment of this application.

List of reference signs:

secondary battery 100
electrode assembly 10
electrode unit 11
first wall 111

second wall 112
first electrode plate 113
second electrode plate 114
separator 115
structural component 20
packaging bag 30
third wall 31
fourth wall 32
first tab 40
second tab50
first adhesive layer 60
second adhesive layer 70
electronic device 1000
first direction X
second direction Y
third direction Z

## DETAILED DESCRIPTION

The following describes the technical solutions in some embodiments of this application with reference to the drawings hereof. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component. The terms such as "top", "bottom", "up", "down", "left", "right", "front", and "back" and other similar expressions used herein are merely for ease of description.

The term "perpendicular" is a description of an ideal state between two components. In the actual production or use state, one component may be approximately perpendicular to another component. For example, numerically, the term "perpendicular" may represent an angle of $90° \pm 10°$ between two straight lines, or a dihedral angle of $90° \pm 10°$ between two planes, or an angle of $90° \pm 10°$ between a straight line and a plane. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

It is hereby noted that a parameter described as being greater than, equal to, or less than a specified endpoint value means that the endpoint value allows for a tolerance of $\pm 10\%$. For example, the statement that A is greater than B by 10 covers the case that A is greater than B by 9 and the case that A is greater than B by 11.

Unless otherwise expressly specified, the term "a plurality of" used herein means two or more.

Unless otherwise defined, all technical and scientific terms used herein bear the same meanings as what is normally understood by a person skilled in the technical field of this application. The terms used in the specification of this application are merely intended to describe specific embodiments but not to limit this application.

This application discloses a secondary battery. The secondary battery includes an electrode assembly, a structural component, and a packaging bag. The electrode assembly is bent in a first direction. The electrode assembly includes m electrode units, where m is an integer greater than or equal to 1. Each of the electrode units includes a first wall and a second wall sequentially disposed in the first direction. Both the first wall and the second wall are bent in the first direction. The structural component is bent in the first direction. The structural component is fixed to the electrode assembly. The structural component is disposed on at least one of the first wall or the second wall. The packaging bag is configured to accommodate the electrode assembly and the structural component.

The bent structural component is in contact with and connected to the electrode unit, thereby offsetting at least a part of the force generated by a deformation tendency of the electrode unit such as a curvature reduction tendency or a flattening tendency. In addition, the force generated by the deformation of the electrode unit is transmitted to the structural component through the packaging bag. The structural component offsets at least a part of the force transmitted from the packaging bag, thereby playing a role in suppressing the deformation of the electrode unit. This reduces the risk of lithium plating of the electrode assembly, reduces the space required to be reserved in a battery compartment configured to accommodate the secondary battery, and facilitates the use of a fixture in a production process, thereby facilitating the production and mounting of the secondary battery, and improving the reliability and applicability of the secondary battery.

The following describes some embodiments of this application with reference to drawings. To the extent that no conflict occurs, the following embodiments and the features in the embodiments may be combined with each other.

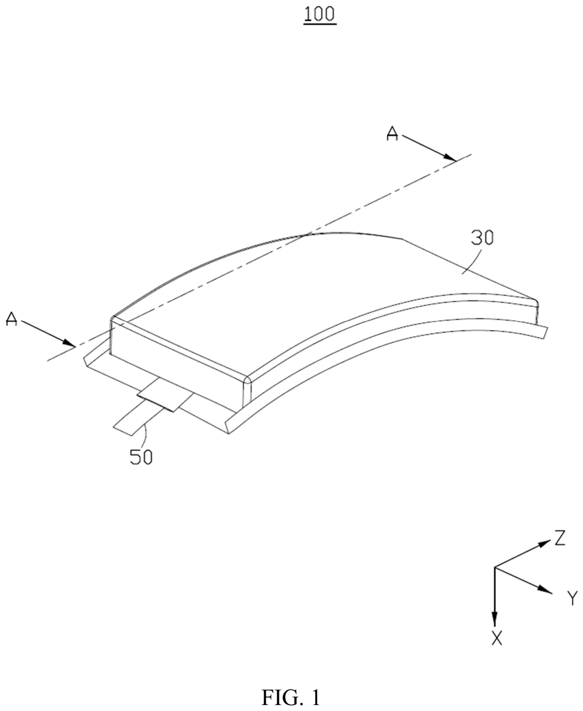

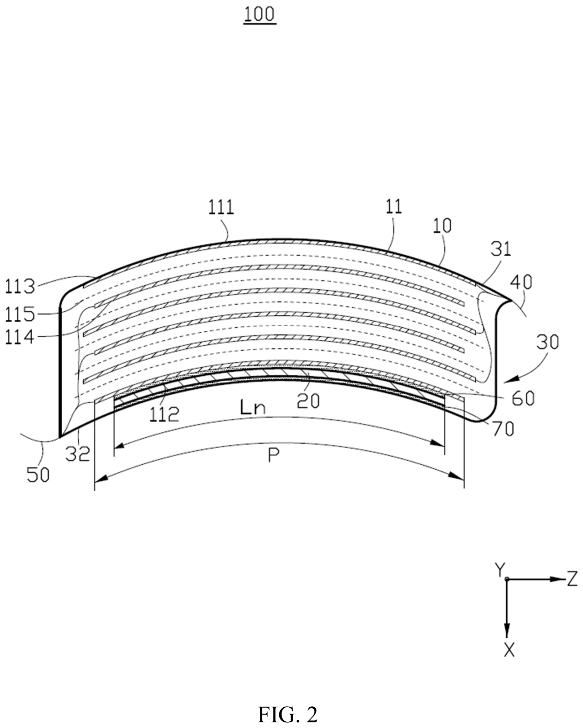

Referring to FIG. 1 and FIG. 2, an embodiment of this application provides a secondary battery 100. The secondary battery 100 includes an electrode assembly 10, a structural component 20, and a packaging bag 30. Both the electrode assembly 10 and the structural component 20 are bent along a first direction X. The structural component 20 is in contact with and connected to the electrode assembly 10. The packaging bag 30 is configured to accommodate the electrode assembly 10 and the structural component 20.

Referring to FIG. 2, the electrode assembly 10 includes 1 electrode unit 11. The electrode unit 11 is bent along the first direction X. The first direction X is a bending direction of the electrode assembly 10. The first direction X is defined as a direction from a convex side toward a concave side of the electrode assembly 10 that is bent.

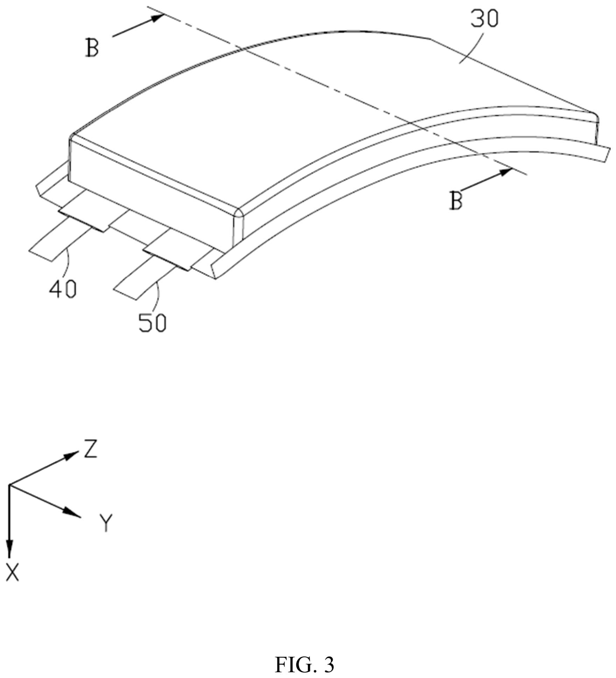

**In** some embodiments, referring to FIG. 1 to FIG. 4, the electrode unit 11 includes a first electrode plate 113, a second electrode plate 114, and a separator 115 disposed between the first electrode plate 113 and the second electrode plate 114.

The first electrode plate 113 and the second electrode plate 114 are of different polarities. For example, the first electrode plate 113 is a positive electrode plate, and the second electrode plate 114 is a negative electrode plate; or, the first electrode plate 113 is a negative electrode plate, and the second electrode plate 114 is a positive electrode plate. The first electrode plate 113 and the second electrode plate 114 are formed by a metal layer overlaid with an active substance layer. For example, the first electrode plate 113 is a positive electrode plate, and may be formed by applying a positive electrode slurry onto a metal layer that includes at least one of aluminum, platinum, nickel, tantalum, titanium, or the like. The positive electrode slurry on the metal layer forms a positive active material layer. The second electrode plate 114 is a negative electrode plate, and may be formed by applying a negative electrode slurry onto a metal layer that includes at least one of copper, platinum, nickel, tantalum, titanium, or the like. The negative electrode slurry on the metal layer forms a negative active material layer. Definitely, the metal layer used for the first electrode plate 113 is different from the metal layer used for the second electrode plate 114. For example, the first electrode plate 113 adopts an aluminum metal layer, and the second electrode plate 114 adopts a copper metal layer.

The separator 115 may be made of a material such as polyethylene (PE) or polypropylene (PP), and is configured to isolate the first electrode plate 113 from the second electrode plate 114.

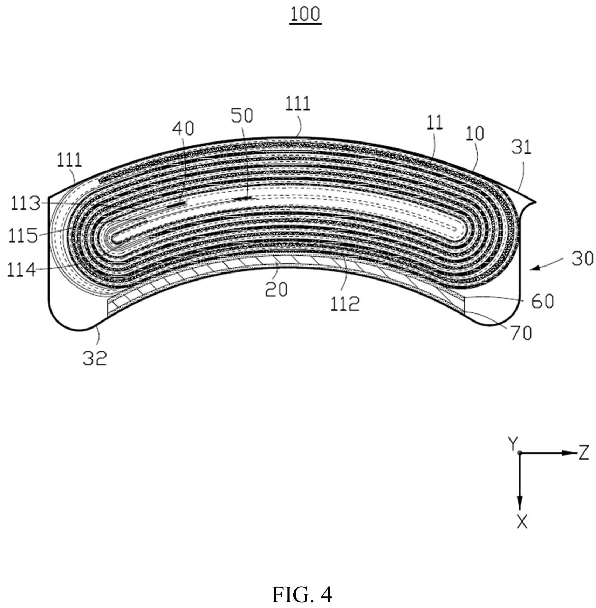

**In** some embodiments, referring to FIG. 2, the first electrode plate 113, the separator 115, and the second electrode plate 114 are stacked together to form a stacked structure. In other embodiments, referring to FIG. 4, the first electrode plate 113, the separator 115, and the second electrode plate 114 are stacked and wound to form a jelly-roll structure.

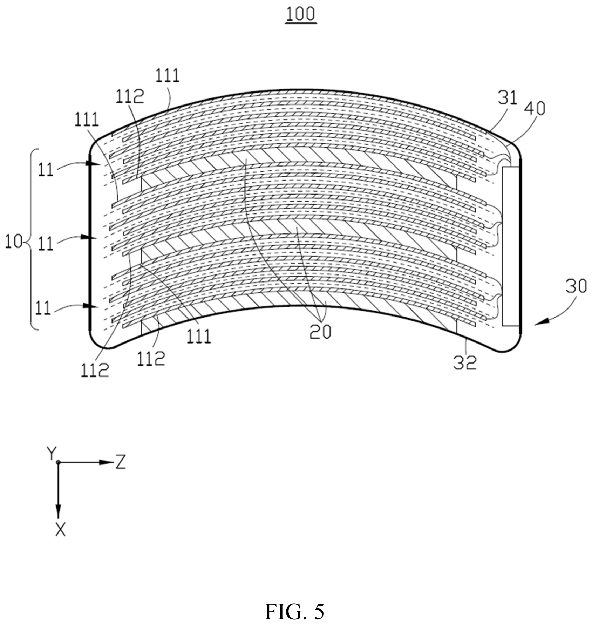

**In** some embodiments, referring to FIG. 5, m is greater than 1, and a plurality of electrode units 11 are stacked along the first direction X. When viewed along a second direction Y perpendicular to the first direction, each electrode unit 11 is a stacked structure arranged in layers. Alternatively, the electrode unit 11 may be a jelly-roll structure with a winding center axis being parallel to a third direction Z. The third direction Z, the first direction X, and the second direction Y are perpendicular to each other.

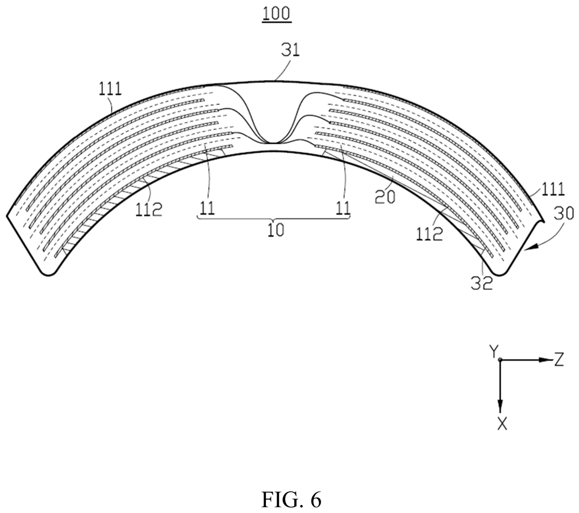

**In** some embodiments, referring to FIG. 6, m is greater than 1. When viewed along the second direction Y, the plurality of electrode units 11 are arranged along a direction in which the electrode units 11 extend curvilinearly.

**In** some embodiments, m is an integer greater than or equal to 3. The plurality of electrode units 11 are stacked along the first direction X and arranged in a direction in which the electrode units 11 extend curvilinearly when viewed along the second direction Y.

**In** some embodiments, referring to FIG. 1 and FIG. 2, the secondary battery 100 further includes a first tab 40 and a second tab 50. The first tab 40 and the second tab 50 are conductive metal components. The first electrode plate 113 of the electrode unit 11 is connected to the first tab 40, so that the polarity of the first tab 40 is the same as that of the first electrode plate 113. The second electrode plate 114 of the electrode unit 11 is connected to the second tab 50, so that the polarity of the second tab 50 is the same as that of the second electrode plate 114. The first tab 40 and the second tab 50 extend out of the packaging bag 30 to lead out the polarity of the electrode unit 11.

In some embodiments, the first tab 40 and the second tab 50 are provided and connected to each electrode unit 11. The electrode units 11 may be connected in series or in parallel by the first tab 40 or the second tab 50, which is not specifically limited here.

In some embodiments, referring to FIG. 1 and FIG. 2, the first tab 40 and the second tab 50 may both extend out from one end of the secondary battery 100 along the third direction Z; or, the first tab 40 may extend out from one end of the secondary battery 100 along the third direction Z, and the second tab 50 may extend out from one end of the secondary battery 100 facing away from the first tab 40 along the third direction Z.

In other embodiments, the first tab 40 and the second tab 50 may extend out from other ends of the secondary battery 100, which is not specifically limited here.

Referring to FIG. 2 to FIG. 6, each electrode unit 11 includes a first wall 111 and a second wall 112 sequentially disposed in the first direction X. Both the first wall 111 and the second wall 112 are bent in the first direction X.

In some embodiments, the first wall 111 may be a part of one of the first electrode plate 113, the second electrode plate 114, or the separator 115; and the second wall 112 may be a part of one of the first electrode plate 113, the second electrode plate 114, or the separator 115.

Referring to FIG. 2 to FIG. 6, the structural component 20 is a solid-state component that is resistant to bending to some extent. The structural component 20 is fixed to the electrode unit 11.

In some embodiments, referring to FIG. 2 to FIG. 6, for the electrode unit 11 to which a structural component 20 is provided and connected, the structural component 20 is fixed to the second wall 112 of the electrode unit 11. The bent structural component 20 is connected and coupled to the second wall 112 of the electrode unit 11, thereby directly offsetting at least a part of the force generated by the deformation tendency of the electrode unit 11, and in turn, suppressing the deformation of the electrode unit 11. Generally, the electronic device 1000 containing a curved secondary battery 100 is a curved device such as a head-mounted VR device, a wristband, a smartwatch, or the like. The concave surface of such electronic device 1000 usually faces the human body. The second wall 112 of this application is a concave wall. When the structural component 20 is disposed on the second wall 112, a protection structure can be added between the electrode unit 11 and the human body, thereby reducing the risk of injury to the human body when the electrode unit 11 is damaged, and further improving the reliability of the secondary battery 100.

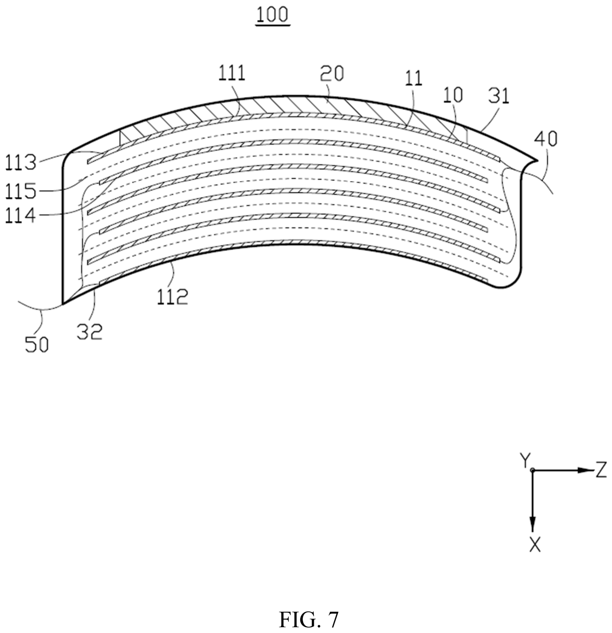

In some embodiments, referring to FIG. 7, for the electrode unit 11 to which a structural component 20 is provided and connected, the structural component 20 is fixed to the first wall 111 of the electrode unit 11. The bent structural component 20 is connected and coupled to the first wall 111 of the electrode unit 11, thereby directly offsetting at least a part of the force generated by the deformation tendency of the electrode unit 11, and in turn, suppressing the deformation of the electrode unit 11.

In some embodiments, for the electrode unit 11 to which a structural component 20 is provided and connected, the structural component 20 is provided and fixed to both the first wall 111 and the second wall 112 of the electrode unit 11. The bent structural component 20 is connected and coupled to both the first wall 111 and the second wall 112 of the electrode unit 11, thereby directly offsetting at least a part of the force generated by the deformation tendency of the electrode unit 11, and in turn, suppressing the deformation of the electrode unit 11. In addition, when a structural component 20 is provided and connected to the second wall 112, a protection structure can be added between the electrode unit 11 and the human body, thereby reducing the risk of injury to the human body when the electrode unit 11 is damaged, and further improving the reliability of the secondary battery 100.

In some embodiments, referring to FIG. 5 and FIG. 6, m is greater than 1, and the second wall 112 of each electrode unit 11 is fixed to a structural component 20, thereby suppressing the deformation of each electrode unit 11, and further reducing the risk of deformation of the secondary battery 100.

In some embodiments, referring to FIG. 2 and FIG. 4, the secondary battery 100 further includes a first adhesive layer 60. The first adhesive layer bonds the structural component 20 to the electrode unit 11 of the electrode assembly 10.

In some embodiments, referring to FIG. 2 and FIG. 4, the first adhesive layer 60 is disposed between the structural component 20 and the second wall 112 of the electrode unit 11, thereby increasing the tightness of the bonding between the structural component 20 and the second wall 112.

In an embodiment in which a structural component 20 is provided and fixed to the first wall 111, the structural component 20 may be bonded to the first wall 111 by the first adhesive layer 60 instead. The first adhesive layer 60 may be disposed between the structural component 20 and the first wall 111 instead.

In some embodiments, the first adhesive layer 60 may be a structural adhesive that transforms from a liquid state to a fixed state, or may be a single-sided or double-sided adhesive tape or strip, which is not specifically limited here.

In some embodiments, the material of the first adhesive layer 60 includes, but is not limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, polyacrylic acid, styrene-butadiene rubber, acrylated styrene-butadiene rubber, epoxy resin, or nylon.

In other embodiments, the structural component 20 may be fixed to the first wall 111, and the structural component 20 may be fixed to the second wall 112, by hot-pressing, bundling, or other means, which will not be described in detail here.

In some embodiments, referring to FIG. 5 and FIG. 6, in the first direction X, the projection of the structural component 20 lies within the projection of the electrode assembly 10, so that an additional space is available in the packaging bag 30 for accommodating an electrolyte solution, thereby enhancing the cycle performance of the secondary battery 100.

In some embodiments, referring to FIG. 5, m is greater than 1, the plurality of electrode units 11 are stacked along the first direction X, and at least one structural component 20 is provided in contact with and connected to the second wall 112 of each electrode unit 11. At least one structural component 20 is provided in contact with and connected to the second wall 112 of each electrode unit 11, so that a structural component 20 is disposed between two adjacent electrode units 11, thereby improving the uniformity of the distribution of the structural components 20, and further enhancing the ability of the structural components 20 to suppress the deformation of the electrode assembly 10.

In some embodiments, a plurality of structural components 20 are provided in contact with and connected to the second wall 112 of each electrode unit 11. The plurality of structural components 20 are stacked along the first direction X, and any two adjacent structural components 20 are in contact with and connected to each other.

In some embodiments, a plurality of structural components 20 are provided in contact with and connected to the second wall 112 of each electrode unit 11. The plurality of structural components 20 are arranged in a direction in which the structural components 20 extend curvilinearly when viewed along the second direction Y.

In some embodiments, referring to FIG. 6, m is greater than 1, and the plurality of electrode units 11 are arranged along a direction in which the electrode units 11 extend curvilinearly when viewed along the second direction Y. The number of the structural components 20 is n, n is an integer greater than or equal to 1, and the n structural components 20 are in contact with and connected to second walls 112 of the plurality of electrode units 11.

In some embodiments, n is greater than 1, and any two adjacent structural components 20 are in contact with and connected to each other. When a plurality of electrode units 11 form an electrode assembly 10 with a large curvature, by disposing a plurality of structural components 20, this application makes the curvature of each individual structural component 20 not excessively large, thereby alleviating the difficulty of processing caused by an excessively large curvature required by the structural component 20.

In some embodiments, m is greater than 1, structural components 20 are provided in contact with and connected to the first walls 111 of some electrode units 11, structural components 20 are provided in contact with and connected to the second walls 112 of some electrode units 11, and no structural components 20 are provided for connecting to some of the electrode units 11. Definitely, other configurations may apply, which will not be described exhaustively here.

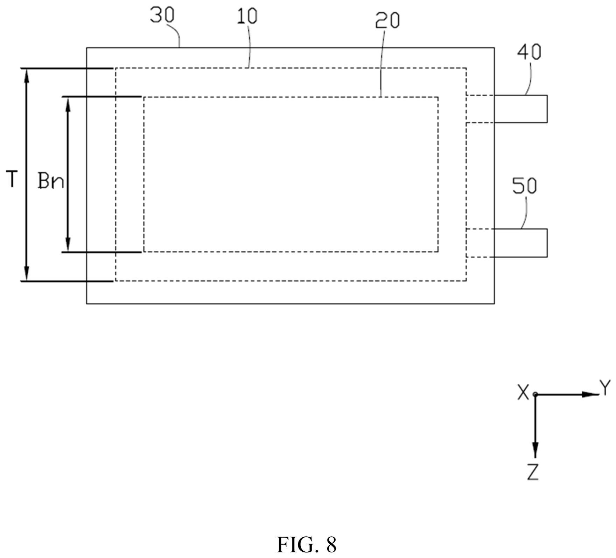

In some embodiments, referring to FIG. 2 and FIG. 8, n is greater than or equal to 1, the width of the $n^{th}$ structural component 20 in the second direction Y is $B_n$, and the length by which the $n^{th}$ structural component 20 extends curvilinearly when viewed along the second direction Y is $L_n$. The third direction Z, the first direction X, and the second direction Y are perpendicular to each other. The electrode assembly 10 exhibits a first width T along the second direction Y, and a first length P by which the electrode assembly 10 extends curvilinearly when viewed along the second direction Y, satisfying: $B_n \leq T$, and $L_n \leq P$.

The length $L_n$ by which the $n^{th}$ structural component 20 extends curvilinearly when the structural component 20 is viewed along the second direction Y may be regarded as the length of the structural component 20 along the third direction Z before being bent or after being spread out, and the first length P may be regarded as the length of the electrode assembly 10 along the third direction Z before being bent or after being spread out.

It is hereby noted that setting the width of the structural component 20 in the second direction Y to be less than the width of the electrode assembly 10 in the second direction Y, and setting the length of the structural component 20 along the bending direction of the structural component 20 when viewed along the second direction Y to be less than the bending length of the electrode assembly 10 when the electrode assembly 10 is viewed in the second direction Y, may reduce the space occupied by the structural component 20, and make the structural component 20 not extend beyond the electrode assembly 10 in the second direction Y and in the bending direction of the electrode assembly 10 when viewed along the second direction Y, thereby making the structural component 20 not occupy the space of the secondary battery 100 in the second direction Y and in the bending direction of the electrode assembly 10 when viewed along the second direction Y.

In some embodiments, $2/3 \times T \leq B_n \leq T$, and $2/3 \times P \leq L_a \leq P$. By setting $2/3 \times T \leq B_n \leq T$ and $2/3 \times P \leq L_n$, when one structural component 20 is provided and connected to one electrode unit 11, the above settings increase the area available for contact and connection between the electrode unit 11 and the structural component 20, thereby reducing the risk of poor connection phenomena such as a reduced connection area and detachment between the structural component 20 and the electrode unit 11. In addition, by increasing the length and width of the structural component 20, this application improves the ability of the structural component 20 to suppress deformation of the electrode unit 11.

In some embodiments, the thickness of a geometric center of the structural component 20 along the first direction X is greater than the thickness of an edge part of the structural component 20 along the first direction X. When the length and width of the structural component 20 are less than those of the electrode assembly 10, the structural component 20 will jack up the packaging bag 30. The reduction in the thickness of the edge part of the structural component 20 along the first direction X is conducive to reducing the height by which the packaging bag 30 is jacked up at the edge of the structural component 20, thereby reducing the stress on the packaging bag at the edge of the structural component 20, and reducing the risk of damage to the packaging bag 30.

In some embodiments, the structural component 20 is a plate with an arcuate edge, thereby reducing the stress on the packaging bag at the edge of the structural component 20, and consequently reducing the risk of damage to the packaging bag 30. The specific processing method may be to chamfer the edge of the plate-shaped structural component 20, or to directly cut the structural component 20 into a circular plate, or the like.

In some embodiments, the structural component 20 is adhesively connected to the electrode unit 11. For example, when a structural component 20 is provided and connected to the first wall 111, an adhesive is disposed between the structural component 20 and the first wall 111 to implement an adhesive connection between the structural component 20 and the first wall 111. For another example, when a structural component 20 is provided and connected to the second wall 112, an adhesive is disposed between the structural component 20 and the second wall 112 to implement an adhesive connection between the structural component 20 and the second wall 112.

In other embodiments, the structural component 20 is connected to the electrode unit 11 by hot pressing.

In some embodiments, the structural component 20 may be made of a material that is one or more of stainless steel, shape memory alloy, polymethyl methacrylate, or polypropylene. For example, the structural component 20 is a stainless steel sheet, an aluminum alloy sheet, a plastic sheet, or the like.

In some embodiments, the structural component 20 is a stainless steel sheet. The stainless steel exhibits the advantage of being resistant to corrosion by an electrolyte solution.

The packaging bag 30 is a soft packaging bag 30, and is configured to accommodate and encapsulate the electrode assembly 10 and the structural component 20. The force generated by a deformation tendency such as a curvature reduction tendency or a flattening tendency of the electrode unit 11 may be transmitted to the structural component 20 through the packaging bag 30. The structural component 20 offsets at least a part of the force generated by the electrode unit 11, thereby suppressing the deformation of the electrode unit 11.

During the charging and discharging of the secondary battery 100, the electrode unit 11 assumes a tendency of deformation such as curvature reduction and flattening, thereby possibly causing misalignment between the first electrode plate 113 and the second electrode plate 114, resulting in lithium plating at the interface, deteriorating the cycle performance, and ultimately reducing the reliability of the secondary battery 100. In addition, the deformation of the electrode unit 11 may also cause mutual squeezing between the secondary battery 100 and a battery compartment for accommodating the battery. This requires a relatively large mounting space to be reserved in the battery compartment, and is adverse to the mounting of the secondary battery 100. The deformation of different individual secondary batteries 100 may vary, and it is difficult for a fixture to adapt to the secondary batteries 100 during production, thereby being adverse to the smooth progress in the production process, and reducing the production efficiency of the secondary battery 100.

The structural component 20 of this application is in contact with and connected to at least one of the first wall 111 or the second wall 112, so that the force generated by the deformation tendency of the bent electrode unit 11 may be directly transmitted to the structural component 20. The structural component 20 offsets at least a part of the force transmitted from the electrode unit 11. In addition, the structural component 20 is disposed within the packaging bag 30, so that the force generated by the deformation tendency of the bent electrode unit 11 may be transmitted to the structural component 20 through the packaging bag 30. The structural component 20 offsets at least a part of the force transmitted from the packaging bag 30, thereby further offsetting the force generated by the deformation tendency of the electrode unit 11. The above two factors combined together make it convenient for the structural component 20 to suppress the deformation of the electrode unit 11, and reduce the risk of lithium plating at the interface and deterioration of the cycle performance caused by the misalignment between the first electrode plate 113 and the second electrode plate 114, thereby improving the reliability of the secondary battery 100. Suppressing the deformation of the electrode unit 11 can further suppress the deformation of the secondary battery 100. By suppressing the deformation of the secondary battery 100, this application reduces the space required to be reserved in the battery compartment in addition to the space for accommodating the secondary battery 100, improves the space utilization rate, reduces the risk of damage to the secondary battery 100 due to mutual force exertion between the secondary battery 100 and the battery compartment due to deformation, and facilitates mounting of the secondary battery 100. Suppressing the deformation of the secondary battery 100 can also enable adaptation to the fixture during production, thereby facilitating the smooth progress of the production process, and improving the production efficiency of the secondary battery 100.

In addition, if the structural component 20 is disposed outside the packaging bag 30 such that the structural component 20 is in contact with and connected to the packaging bag 30, the structural component 20 can hardly continue to play the role in suppressing the deformation of the electrode unit 11 in the case of poor connection, caused by factors such as a reduction in the connection area or detachment, between the structural component 20 and the packaging bag 30. By disposing the structural component 20 inside the packaging bag 30, this application enables the packaging bag 30 to play a constraining role, reduces the burden on a junction between the electrode unit 11 and the structural component 20 when the electrode unit 11 directly transmits the force to the structural component 20, reduces the risk of poor connection of the structural component 20, and still plays the role of suppressing the deformation of the electrode unit 11 even when the structural component 20 is poorly connected.

In some embodiments, referring to FIG. 2 to FIG. 7, the packaging bag 30 includes a third wall 31 and a fourth wall 32 sequentially disposed in the first direction X. The third wall 31 is closer to the first wall 111 than the fourth wall 32. The fourth wall 32 is closer to the second wall than the third wall 31.

In some embodiments, referring to FIG. 2 to FIG. 4, the third wall 31 is at least partially in contact with the first wall 111, so that the third wall 31 and the fourth wall 32 of the packaging bag 30 are in direct contact with the electrode unit 11 and the structural component 20. In this way, the force generated by the deformation tendency of the electrode unit 11 is facilitated to be directly transmitted to the structural component 20 through the packaging bag 30, thereby making it convenient for the structural component 20 to offset the force generated by the electrode unit 11, and in turn, improving the effect of the structural component 20 in suppressing the deformation of the electrode unit 11. The secondary battery 100 further includes a second adhesive layer 70. The second adhesive layer 70 bonds the fourth wall 32 to the structural component 20, thereby improving the tightness of the bonding between the fourth wall 32 and the structural component 20 as well as the anti-drop performance, and reducing mutual movement and friction between the structural component 20 and the packaging bag 30.

In some embodiments, referring to FIG. 2 to FIG. 4, the second adhesive layer 70 is disposed between the structural component 20 and the fourth wall 32, thereby increasing the tightness of the connection between the structural component 20 and the fourth wall 32.

In an embodiment in which a structural component 20 is provided and fixed to the first wall 111, the second adhesive layer 70 bonds the third wall 31 to the structural component 20. The second adhesive layer 70 may be disposed between the third wall 31 and the structural component 20 instead.

In some embodiments, the second adhesive layer 70 may be a structural adhesive that transforms from a liquid state to a fixed state, or may be a single-sided or double-sided adhesive tape or strip, which is not specifically limited here.

In some embodiments, the material of the second adhesive layer 70 includes, but is not limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, polyacrylic acid, styrene-butadiene rubber, acrylated styrene-butadiene rubber, epoxy resin, or nylon.

In some embodiments, referring to FIG. 5, m is an integer greater than 1, and a plurality of electrode units 11 are stacked along the first direction X. Along the first direction X, a structural component 20 is disposed between the second wall 112 of the electrode unit 11 and the packaging bag 30, and the structural component 20 is in direct contact with both the second wall 112 and the packaging bag 30, so that the packaging bag 30 may conveniently transmit the force generated by the deformation tendency of the electrode unit 11 to the structural component 20, thereby improving the effect of the packaging bag 30 in suppressing the deformation of the electrode unit 11.

In some embodiments, the packaging bag 30 is compounded of a plurality of materials. As an example, the third wall 31 is made of aluminum laminated film, and the fourth wall 32 is made of steel laminated film. The bend strength of the steel laminated film is greater than that of the aluminum laminated film. The fourth wall 32 that is in contact with the structural component 20 is made of steel laminated film. When the force generated by the deformation tendency of the electrode unit 11 is transmitted to the third wall 31 made of the aluminum laminated film, the third wall 31 transmits the force to the fourth wall 32 made of the steel laminated film. The bend strength of the fourth wall 32 made of the steel laminated film is greater than that of the third wall 31 made of the aluminum laminated film, thereby being able to offset at least a part of the force transmitted by the third wall 31. In this way, the fourth wall 32 can play a role in suppressing the deformation of the electrode unit 11, thereby reducing the thickness of the structural component 20 in the first direction X, and increasing the energy density of the secondary battery 100.

In some embodiments, the fourth wall 32 is a steel laminated film, and the fourth wall 32 is connected to the structural component 20, thereby improving the integrity of the steel laminated film and the structural component 20, and further improving the effect of suppressing the deformation of the electrode unit 11. The fourth wall 32 may be connected to the structural component 20 by bonding or hot pressing, and the connection manner is not particularly limited herein.

In other embodiments, the packaging bag 30 is made of a uniform material, such as aluminum laminated film or steel laminated film.

In some embodiments, in a case that the electrode assembly 10 includes one electrode unit 11, there is one structural component 20, and the structural component 20 is made of a 304 stainless steel sheet, the structural component 20 and the electrode unit 11 satisfy the following Formula 1 so as to make the curvature radius change rate of the electrode unit 11 less than 4%.

Formula 1

$$(B \times H^2)/L > \frac{1}{2900}(W \times D^2)/C$$

In the formula above, B represents the width of the structural component 20 in the second direction Y, L represents the length by which the structural component 20 extends curvilinearly when viewed along the second direction Y, and H represents the thickness of the structural component 20 in the first direction X. W represents the width of the electrode unit 11 in the second direction Y, C represents the length by which the electrode unit 11 extends curvilinearly when viewed along the second direction Y, and D represents the thickness of the electrode unit 11 in the first direction X.

When the curvature radius change rate of the electrode unit 11 is excessively high, there is a risk of misalignment between the first electrode plate 113 and the second electrode plate 114. The misalignment results in lithium plating at the interface, and consequentially leads to a decline in the cycle performance and a decline in the reliability of the secondary battery 100. In addition, the deformation of the electrode unit 11 may also cause mutual squeezing between the secondary battery 100 and a battery compartment for accommodating the battery, thereby being adverse to the mounting of the secondary battery 100. The deformation of different individual secondary batteries 100 may vary, and therefore, it is difficult for a fixture to adapt to the secondary batteries 100, thereby being adverse to the smooth progress in the production process, and reducing the production efficiency of the secondary battery 100. This application reduces the risk of the above problems by controlling the curvature radius change rate of the electrode unit to be less than 4%.

In an embodiment of this application, the process by which the secondary battery 100 is discharged from a fully charged state to a fully discharged state and then charged to a fully charged state is referred to as 1 cycle.

A cycle test process in an embodiment of this application is: charging and discharging a secondary battery 100 in a 45 °C environment cyclically, each cycle being a period from a fully discharged state to a fully charged state. A total of 400 cycles are completed.

The test method for the curvature radius change rate of the electrode unit 11 in an embodiment of this application is as follows:

Obtaining an initial curvature radius, scanning a 3D structure of the surface of the secondary battery 100 with a 3D profilometer when the secondary battery 100 is not in a cycle test, and then averaging the scanned surface to obtain 1 arc line; selecting 3 points on the arc line to fit 1 standard circular arc line, and then the curvature radius a.

Obtaining the curvature radius after cycling, scanning the 3D structure of the surface of the secondary battery 100 with a 3D profilometer after the secondary battery 100 completes the cycle test, and then averaging the scanned surface to obtain 1 arc line; selecting 3 points on the arc line to fit 1 standard circular arc line, and then reading the curvature radius b.

Obtaining the curvature radius change rate, where the curvature radius change rate of the electrode unit 11 is (b-a)/a.

The principles for selecting points are: The arc line determined by point fitting needs to maximally coincide with the arc line obtained by averaging the surface, and the points near the endpoints need to excluded.

In some embodiments, in response to a scenario in which the electrode assembly includes one or more electrode units 11, there are one or more structural components 20 accordingly. Each structural component 20 may be made of a different material. Assuming that the bend strength of the 304 stainless steel is 40 MPa, the structural component 20 and the electrode unit 11 satisfy the following Formula 2 so as to make the curvature radius change rate of the electrode unit 11 less than 4%.

Formula 2

$$\sigma_1 \frac{B_1 \times H_1^2}{L_1} + \sigma_2 \frac{B_2 \times H_2^2}{L_2} + \cdots + \sigma_n \frac{B_n \times H_n^2}{L_n} > \frac{2}{145} \left[ \frac{W_1 \times D_1^2}{C_1} + \frac{W_2 \times D_2^2}{C_2} + \cdots + \frac{W_m \times D_m^2}{C_m} \right]$$

In the formula above, $B_n$ represents the width of the $n^{th}$ structural component 20 in the second direction Y, $L_n$ represents the length by which the $n^{th}$ structural component 20 extends curvilinearly when viewed along the second direction Y, and $H_n$ represents the thickness of the $n^{th}$ structural component 20 in the first direction X. $W_m$ represents the width of the $m^{th}$ electrode unit 11 in the second direction Y perpendicular to the first direction X, $C_m$ represents the length by which the $m^{th}$ electrode unit 11 extends curvilinearly when viewed along the second direction Y, and $D_m$ represents the thickness of the $m^{th}$ electrode unit 11 in the first direction X. $\sigma_n$ represents the bend strength of the $n^{th}$ structural component 20.

A method for calculating the bend strength of the structural component 20 is as follows: Taking a sample for calculation, where the sample is a structural component 20, the length of the sample is 1, the width of the sample is b, and the thickness of the sample is h. Placing the sample symmetrically on two supporting seats, where the distance between the two supporting seats is K. Applying a force to the sample along the thickness direction of the sample at a center position of a line that connects the two supporting seats, so that the sample is deformed at a rate of 0.5 mm/min until the sample is fractured. Reading the load value F at the time of fracturing. Calculating the bend strength of the sample according to the following formula: $\sigma = 3FK/(2b \times h^2)$.

To verify the effect of the structural component 20 on suppressing the deformation of the electrode unit 11 when the structural component 20 is disposed inside the packaging bag 30 in this application in contrast to the effect of the structural component 20 on suppressing the deformation of the electrode unit 11 when the structural component 20 is disposed outside the packaging bag 30, the following comparative test is performed:

Embodiment 1

In this embodiment, the first electrode plate 113 is a positive electrode plate, and the second electrode plate 114 is a negative electrode plate. Both the first electrode plate 113 and the second electrode plate 114 are prepared by disposing an active material layer on a current collector.

(Preparing a first electrode plate 113)

Mixing lithium cobalt oxide, polyvinylidene fluoride (PVDF), and conductive carbon black (SP) at a mass ratio of 97 : 1.5 : 1.5, adding NMP as a solvent to formulate a slurry in which the solid content is 75 wt%, and stirring well. Applying the slurry evenly onto one surface of 6 mm-thick positive current collector aluminum foil by a coating process, and drying the slurry at 85 °C to obtain a positive electrode plate with a 120 $\mu$m-thick positive active material layer. Subsequently, repeating the above steps on the other surface of the positive electrode plate to obtain a positive electrode plate coated with the positive active material on both sides. Subsequently, cold-pressing, slitting, and cutting the resulting positive electrode plate, and welding a tab to obtain a first electrode plate 113.

(Preparing a second electrode plate 114)

Mixing artificial graphite, conductive carbon black (Super P), styrene-butadiene rubber (SBR), and sodium carboxymethyl cellulose (CMC) at a mass ratio of 97: 1: 1: 1, adding deionized water to form a slurry in which the solid content is 75 wt%, and stirring well. Applying the slurry evenly onto one surface of 6 mm-thick negative current collector copper foil, and drying the slurry at 85 °C to obtain a negative electrode plate with a 120 $\mu$m-thick negative active material layer. Subsequently, repeating the above steps on the other surface of the negative electrode plate to obtain a negative electrode plate coated with the negative active material on both sides. Subsequently, cold-pressing, slitting, and cutting the resulting negative electrode plate, and welding a tab to obtain a second electrode plate 114.

**(Preparing an electrolyte solution)**

Mixing ethylene carbonate, propylene carbonate, diethyl carbonate, propyl propionate, and vinylene carbonate at a mass ratio of 20 : 30 : 20 : 28 : 2 to obtain a nonaqueous organic solvent. Subsequently, mixing a lithium salt $LiPF_6$ with the nonaqueous organic solvent at a mass ratio of 8 : 92 to obtain an electrolyte solution.

**(Preparing a separator 115)**

Using a 7 $\mu$m-thick porous polyethylene film as a separator.

**(Preparing a structural component 20)**

Using a 304 stainless steel sheet bent in the first direction X, where the length $L_1$ by which the structural component 20 extends curvilinearly when viewed along the second direction Y is 48 mm, the width $B_1$ of the structural component 20 along the second direction Y is 51 mm, and the thickness $H_1$ of the structural component 20 along the first direction X is 0.15 mm.

**(Preparing a secondary battery 100)**

Stacking the above-prepared first electrode plate 113, separator 115, and second electrode plate 114 sequentially such that the separator 115 is located between the first electrode plate 113 and the second electrode plate 114 to play an isolating role. The first electrode plate 113, the separator 115, and the second electrode plate 114 are stacked sequentially to obtain an electrode unit 11. Alternatively, the stacked first electrode plate 113, separator 115, and second electrode plate 114 may be wound to obtain an electrode unit 11. Referring to FIG. 2, the number of electrode units 11 is one, and the one electrode unit 11 constitutes an electrode assembly 10. Applying a force to the electrode unit 11 until the electrode unit 11 bends in the first direction. When viewed along the second direction Y, the length $C_1$ by which the electrode unit 11 extends curvilinearly is 53 mm (when there is one electrode unit 11, $C_1$ is equal to P), the width $W_1$ of the electrode unit 11 along the second direction Y is 56 mm (when there is one electrode unit 11, $W_1$ is equal to T), and the thickness $D_1$ of the electrode unit 11 along the first direction X is 8 mm. The number of structural components 20 is one. Leaving the structural component 20 to be in contact with and connected to the second wall 112 of the electrode unit 11. Placing the electrode unit 11 and the structural component 20 into an aluminum laminated film packaging bag 30, drying the packaging bag, and then injecting an electrolyte solution. Performing steps such as vacuum sealing, static standing, chemical formation, degassing, and edge trimming to obtain a secondary battery 100.

In this embodiment, the structural component 20 is located in the packaging bag, and the electrode unit 11 and the structural component 20 satisfy Formula 1 and the following conditions: $2/3 \times T \leq B_n \leq T$ and $2/3 \times P \leq L_n \leq P$. A cycle test is performed on the secondary battery 100. After the secondary battery 100 completes the cycle test, the curvature radius change rate of the electrode unit 11 is 3%.

**Embodiment 2**

Identical to Embodiment 1 except the difference in (Preparing a structural component 20) in contrast to Embodiment 1.

**(Preparing a structural component 20)**

Using a 304 stainless steel sheet bent in the first direction X, where the length $L_1$ by which the structural component 20 extends curvilinearly when viewed along the second direction Y is 48 mm, the width $B_1$ of the structural component 20 along the second direction Y is 36 mm, and the thickness $H_1$ of the structural component 20 along the first direction X is 0.15 mm.

In this embodiment, the structural component 20 is located in the packaging bag, and the electrode unit 11 and the structural component 20 satisfy Formula 1 but without satisfying the following conditions: $2/3 \times T \leq B_n \leq T$ and $2/3 \times P \leq L_n \leq P$. A cycle test is performed on the secondary battery 100. After the secondary battery 100 completes the cycle test, the curvature radius change rate of the electrode unit 11 is 3.5%.

**Comparative Embodiment 1**

Identical to Embodiment 1 except the difference in (Preparing a secondary battery 100) in contrast to Embodiment 1.

**(Preparing a secondary battery 100)**

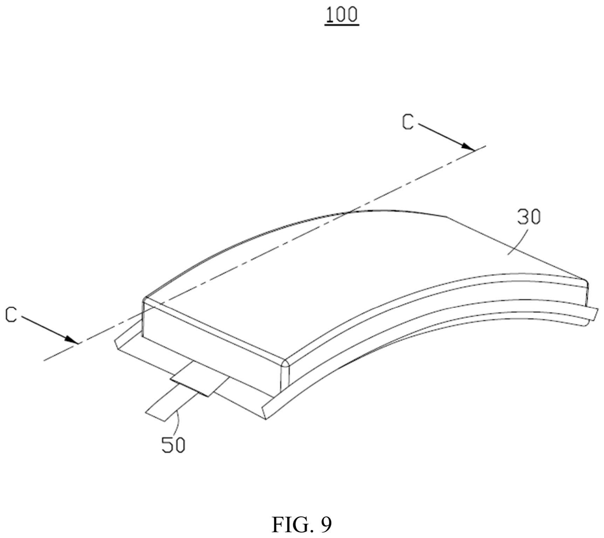

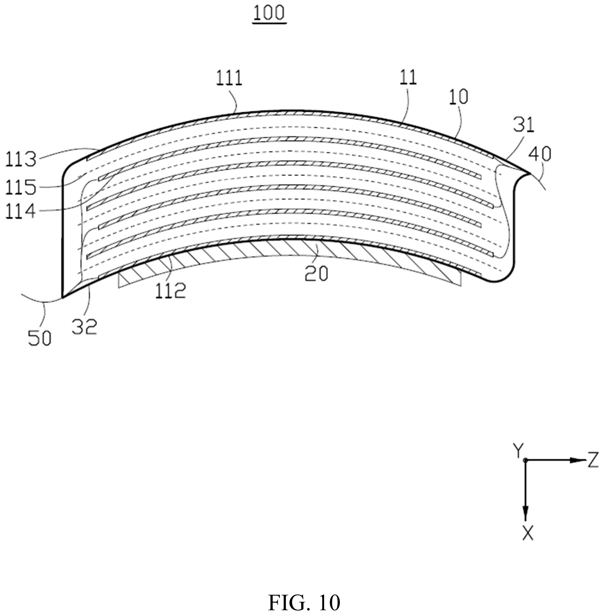

Stacking the above-prepared first electrode plate 113, separator 115, and second electrode plate 114 sequentially such that the separator 115 is located between the first electrode plate 113 and the second electrode plate 114 to play an isolating role. The first electrode plate 113, the separator 115, and the second electrode plate 114 are stacked sequentially to obtain an electrode unit 11. Alternatively, the stacked first electrode plate 113, separator 115, and second electrode plate 114 may be wound to obtain an electrode unit 11. Referring to FIG. 9 and FIG. 10, the number of electrode units 11 is one, and the one electrode unit 11 constitutes an electrode assembly 10. Applying a force to the electrode unit 11 until the electrode unit 11 bends in the first direction X. When viewed along the second direction Y, the length $C_1$ by which the electrode unit 11 extends curvilinearly is 53 mm (when there is one electrode unit 11, $C_1$ is equal to P), the width $W_1$ of the electrode unit 11 along the second direction Y is 56 mm (when there is one electrode unit 11, $W_1$ is equal to T), and the thickness $D_1$ of the electrode unit 11 along the first direction X is 8 mm. Placing the electrode unit 11 into an aluminum laminated film packaging bag 30, drying the packaging bag, and then injecting an electrolyte solution. Performing steps such as vacuum sealing, static standing, chemical formation, degassing, and edge trimming, and leaving the structural component 20 (the number of structural components 20 is one) to be in contact with and connected to one side of the packaging bag 30 facing away from the second wall 112, so as to obtain a secondary battery 100.

In this comparative embodiment, the structural component 20 is located outside the packaging bag 30, and the electrode unit 11 and the structural component 20 satisfy Formula 1 and the following conditions: $2/3 \times T \leq B_n \leq T$ and $2/3 \times P \leq L_n \leq P$. A cycle test is performed on the secondary battery 100. After the secondary battery 100 completes the cycle test, the curvature radius change rate of the electrode unit 11 is 7%.

**Comparative Embodiment 2**

Identical to Embodiment 1 except the difference in (Preparing a structural component 20) in contrast to Embodiment 1.

**(Preparing a structural component 20)**

Using a 304 stainless steel sheet bent in the first direction X, where the length $L_1$ by which the structural component 20 extends curvilinearly when viewed along the second direction Y is 48 mm, the width $B_1$ of the structural component 20 along the second direction Y is 35 mm, and the thickness $H_1$ of the structural component 20 along the first direction X is 0.05 mm.

In this comparative embodiment, the structural component 20 is located inside the packaging bag 30, and the electrode unit 11 and the structural component 20 satisfy neither Formula 1 nor the following conditions: $2/3 \times T \leq B_n \leq T$ and $2/3 \times P \leq L_n \leq P$. A cycle test is performed on the secondary battery 100. After the secondary battery 100 completes the cycle test, the curvature radius change rate of the electrode unit 11 is 6%.

**Comparative Embodiment 3**

Identical to Embodiment 1 except the differences in (Preparing a structural component 20) and (Preparing a secondary battery 100) in contrast to Embodiment 1.

**(Preparing a structural component 20)**

Using a 304 stainless steel sheet bent in the first direction X, where the length $L_1$ by which the structural component 20 extends curvilinearly when viewed along the second direction Y is 48 mm, the width $B_1$ of the structural component 20 along the second direction Y is 35 mm, and the thickness $H_1$ of the structural component 20 along the first direction X is 0.05 mm.

**(Preparing a secondary battery 100)**

Stacking the above-prepared first electrode plate 113, separator 115, and second electrode plate 114 sequentially such that the separator 115 is located between the first electrode plate 113 and the second electrode plate 114 to play an isolating role. The first electrode plate 113, the separator 115, and the second electrode plate 114 are stacked sequentially to obtain an electrode unit 11. Alternatively, the stacked first electrode plate 113, separator 115, and second electrode plate 114 may be wound to obtain an electrode unit 11. Referring to FIG. 9 and FIG. 10, the number of electrode units 11 is one, and the one electrode unit 11 constitutes an electrode assembly 10. Applying a force to the electrode unit 11 until the electrode unit 11 bends in the first direction X. When viewed along the second direction Y, the length $C_1$ by which the electrode unit 11 extends curvilinearly is 53 mm (when there is one electrode unit 11, $C_1$ is equal to P), the width $W_1$ of the electrode unit 11 along the second direction Y is 56 mm (when there is one electrode unit 11, $W_1$ is equal to T), and the thickness $D_1$ of the electrode unit 11 along the first direction X is 8 mm. Placing the electrode unit 11 into an aluminum laminated film packaging bag 30, drying the packaging bag, and then injecting an electrolyte solution. Performing steps such as vacuum sealing, static standing, chemical formation, degassing, and edge trimming. Leaving the structural component 20 (the number of structural components 20 is one) to be in contact with and connected to one side of the packaging bag 30 facing away from the second wall 112, so as to obtain a secondary battery 100.

In this comparative embodiment, the structural component 20 is located outside the packaging bag 30, and the electrode unit 11 and the structural component 20 satisfy neither Formula 1 nor the following conditions: $2/3 \times T \leq B_n \leq T$ and $2/3 \times P \leq L_n \leq P$. A cycle test is performed on the secondary battery 100. After the secondary battery 100 completes the cycle test, the curvature radius change rate of the electrode unit 11 is 9%.

| Embodiment/ Comparative Embodiment | Electrode unit | | | Structural component located inside/outside the packaging bag | Structural component | | | | Curvature radius change rate |
|---|---|---|---|---|---|---|---|---|---|
| | Length $C_1$ (mm) | Width $W_1$ (mm) | Thickness Di (mm) | | Length $L_1$ (mm) | Width $B_1$ (mm) | Thickness $H_1$ (mm) | Material | |
| Embodiment 1 | 53 | 56 | 8 | Inside | 48 | 51 | 0.15 | Stainless steel | 3% |
| Embodiment 2 | 53 | 56 | 8 | Inside | 48 | 36 | 0.15 | Stainless steel | 3.5% |
| Comparative Embodiment 1 | 53 | 56 | 8 | Outside | 48 | 51 | 0.15 | Stainless steel | 7% |
| Comparative Embodiment 2 | 53 | 56 | 8 | Inside | 48 | 35 | 0.05 | Stainless steel | 6% |
| Comparative Embodiment 3 | 53 | 56 | 8 | Outside | 48 | 35 | 0.05 | Stainless steel | 9% |

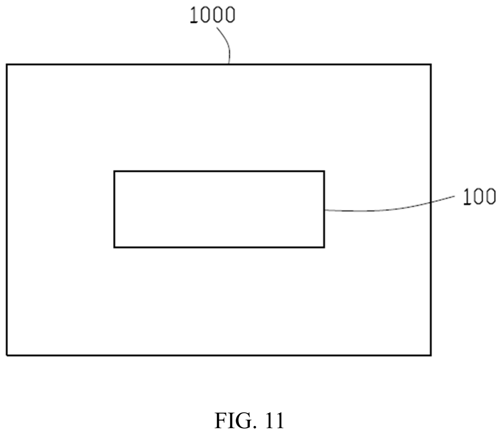

Referring to FIG. 11, an embodiment of this application further provides an electronic device 1000. The electronic device 1000 includes the secondary battery 100 disclosed in any one of the above embodiments. The electronic device 1000 employs the technical solution about any one of the embodiments of the secondary battery 100 disclosed above, and therefore, achieves at least the beneficial effects brought by the technical solution about any one of the embodiments of the secondary battery 100, the details of which are omitted here.

It is hereby noted that the secondary battery 100 of the electronic device 1000 improves the ability to suppress deformation of the electrode unit 11, thereby reducing the deformation of the secondary battery 100, reducing the risk of lithium plating in the secondary battery 100, and improving the processing efficiency of the secondary battery 100. This improves the reliability of the electronic device 1000 containing the secondary battery 100, and improves the production efficiency of the electronic device 1000.

The electronic device 1000 may be a VR head-mounted device, an AR head-mounted device, a smartwatch, a smart wristband, a curved screen, or the like, which is not listed here exhaustively.

In addition, a person of ordinary skill in the art understands that the foregoing embodiments are merely intended to illustrate this application, but not intended to limit this application. Any and all appropriate modifications and changes made to the embodiments without departing from the essence of this application still fall within the protection scope of this application.

## Claims

1. A secondary battery, **characterized in that** the secondary battery comprises:

   an electrode assembly, wherein the electrode assembly is bent in a first direction, the electrode assembly comprises m electrode units, m is an integer greater than or equal to 1, each of the electrode units comprises a first wall and a second wall sequentially disposed in the first direction, and both the first wall and the second wall are bent in the first direction;
   a structural component, wherein the structural component is bent in the first direction, the structural component is fixed to the electrode assembly, the structural component is disposed on at least one of the first wall or the second wall, a number of the structural components is n, and n is an integer greater than or equal to 1;
   a packaging bag, wherein the packaging bag is configured to accommodate the electrode assembly and the structural component; and
   the electrode assembly and the structural component satisfy the following formula:

   $$\sigma_1 \frac{B_1 \times H_1^2}{L_1} + \sigma_2 \frac{B_2 \times H_2^2}{L_2} + \cdots + \sigma_n \frac{B_n \times H_n^2}{L_n} > \frac{2}{145}\left[\frac{W_1 \times D_1^2}{C_1} + \frac{W_2 \times D_2^2}{C_2} + \cdots + \frac{W_m \times D_m^2}{C_m}\right]$$

   wherein,
   $W_m$ represents a width of an $m^{th}$ electrode unit in a second direction perpendicular to the first direction, $C_m$ represents a length by which the $m^{th}$ electrode unit extends curvilinearly when viewed along the second direction, and $D_m$ represents a thickness of the $m^{th}$ electrode unit in the first direction;
   $B_n$ represents a width of an $n^{th}$ structural component in the second direction, $L_n$ represents a length by which the $n^{th}$ structural component extends curvilinearly when viewed along the second direction, and $H_n$ represents a thickness of the $n^{th}$ structural component in the first direction; and
   $\sigma_n$ represents bend strength of the $n^{th}$ structural component.

2. The secondary battery according to claim 1, **characterized in that** the electrode assembly exhibits a first width T along the second direction and a first length P by which the electrode assembly extends curvilinearly when viewed along the second direction, satisfying: $2/3 \times T \leq B_n \leq T$, and $2/3 \times P \leq L_n \leq P$.

3. The secondary battery according to claim 1, **characterized in that** the secondary battery further comprises a first adhesive layer, and the structural component is fixed to the electrode assembly by the first adhesive layer.

4. The secondary battery according to claim 1, **characterized in that** m = 1, n = 1, and the structural component is disposed on the second wall of the electrode unit.

5. The secondary battery according to claim 4, **characterized in that** the secondary battery further comprises a second adhesive layer; the packaging bag comprises a third wall and a fourth wall sequentially disposed in the first direction, the third wall is at least partially in contact with the first wall, and the fourth wall is bonded to the structural component by the second adhesive layer.

6. The secondary battery according to claim 1, **characterized in that** the packaging bag is made of a material that is at least one of an aluminum laminated film or a steel laminated film.

7. The secondary battery according to claim 6, **characterized in that** the packaging bag comprises a third wall and a fourth wall sequentially disposed in the first direction, both the third wall and the fourth wall bend in the first direction, the third wall is made of an aluminum laminated film, and the fourth wall is made of a steel laminated film.

8. The secondary battery according to claim 1, **characterized in that** the electrode unit comprises a first electrode plate, a second electrode plate, and a separator disposed between the first electrode plate and the second electrode plate, and the first electrode plate, the separator, and the second electrode plate are stacked to form a stacked structure; or, the first electrode plate, the separator, and the second electrode plate are stacked and wound to form a jelly-roll structure.

9. The secondary battery according to claim 1, **characterized in that** m is greater than 1, the m electrode units are arranged along a direction in which the electrode units extend curvilinearly, and the n structural components are disposed on second walls of the m electrode units.

10. The secondary battery according to claim 1, **characterized in that** m is greater than 1, the m electrode units are stacked along the first direction, and the second wall of each of the electrode units is provided with at least one structural component.

11. The secondary battery according to claim 1, **characterized in that** the structural component is made of a material that is one or more of stainless steel, shape memory alloy, polymethyl methacrylate, or polypropylene.

12. The secondary battery according to claim 1, **characterized in that** in the first direction, a projection of the structural component lies within a projection of the electrode assembly.

13. An electronic device, **characterized in that** the electronic device comprises the secondary battery according to any one of claims 1 to 12.

<u>100</u>

FIG. 1

FIG. 2

FIG. 3

FIG. 4

100

FIG. 5

FIG. 6

FIG. 7

FIG. 8

100

FIG. 9

EP 4 693 584 A1

<u>100</u>

FIG. 10

26

FIG. 11

## INTERNATIONAL SEARCH REPORT

| International application No. |
|---|
| **PCT/CN2023/085758** |

### A. CLASSIFICATION OF SUBJECT MATTER

H01M10/0587(2010.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 柔性, 弧面, 弧形, 曲面, 弯曲, 形变, 变形, 力, 降低, 减小, 抑制, 结构, 加强, 增强, 板, 金属, 塑料, 树脂, 强度, 长, 宽, 高, 厚, battery, flexible, curved, bent, deformed, force, reduced, restrained, structural, reinforced, sheet, plate, metal, plastic, resin, strength, length, width, height, thickness

### C. DOCUMENTS CONSIDERED TO BE RELEVANT

| Category* | Citation of document, with indication, where appropriate, of the relevant passages | Relevant to claim No. |
|---|---|---|
| A | CN 1639886 A (SONY CORP.) 13 July 2005 (2005-07-13) <br> description, page 4, line 8-page 10, line 12, and figures 1-7 | 1-13 |
| A | CN 109075280 A (SEMICONDUCTOR ENERGY LABORATORY CO., LTD.) 21 December 2018 (2018-12-21) <br> entire document | 1-13 |
| A | CN 218498135 U (NINGDE CONTEMPORARY AMPEREX TECHNOLOGY CO., LTD.) 17 February 2023 (2023-02-17) <br> entire document | 1-13 |
| A | US 2013224562 A1 (SEMICONDUCTOR ENERGY LABORATORY CO., LTD.) 29 August 2013 (2013-08-29) <br> entire document | 1-13 |
| A | US 2015171380 A1 (SAMSUNG SDI CO., LTD.) 18 June 2015 (2015-06-18) <br> entire document | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 August 2023** | **25 December 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/085758**

| Patent document cited in search report | | | Publication date (day/month/year) | Patent family member(s) | | | Publication date (day/month/year) |
|---|---|---|---|---|---|---|---|
| CN | 1639886 | A | 13 July 2005 | US | 2005130030 | A1 | 16 June 2005 |
| | | | | US | 7361428 | B2 | 22 April 2008 |
| | | | | JP | 2003257389 | A | 12 September 2003 |
| | | | | EP | 1498964 | A1 | 19 January 2005 |
| | | | | EP | 1498964 | A4 | 23 September 2009 |
| | | | | EP | 1498964 | B1 | 04 April 2012 |
| | | | | WO | 03075374 | A1 | 12 September 2003 |
| | | | | CN | 1306631 | C | 21 March 2007 |
| CN | 109075280 | A | 21 December 2018 | WO | 2017178916 | A1 | 19 October 2017 |
| | | | | JP | 2023087102 | A | 22 June 2023 |
| | | | | US | 2017301896 | A1 | 19 October 2017 |
| | | | | US | 10930904 | B2 | 23 February 2021 |
| | | | | TW | 202209743 | A | 01 March 2022 |
| | | | | TWI | 785720 | B | 01 December 2022 |
| | | | | JP | 2017195179 | A | 26 October 2017 |
| | | | | JP | 6932532 | B2 | 08 September 2021 |
| | | | | KR | 20180132686 | A | 12 December 2018 |
| | | | | KR | 20220028158 | A | 08 March 2022 |
| | | | | US | 2021175573 | A1 | 10 June 2021 |
| | | | | US | 11600883 | B2 | 07 March 2023 |
| | | | | US | 2023207976 | A1 | 29 June 2023 |
| | | | | TW | 202312551 | A | 16 March 2023 |
| | | | | TW | 201807860 | A | 01 March 2018 |
| | | | | TWI | 737711 | B | 01 September 2021 |
| | | | | JP | 2021185573 | A | 09 December 2021 |
| | | | | JP | 7277522 | B2 | 19 May 2023 |
| CN | 218498135 | U | 17 February 2023 | | None | | |
| US | 2013224562 | A1 | 29 August 2013 | US | 9859585 | B2 | 02 January 2018 |
| | | | | JP | 2015097216 | A | 21 May 2015 |
| | | | | JP | 5802344 | B2 | 28 October 2015 |
| | | | | JP | 2021073669 | A | 13 May 2021 |
| | | | | JP | 2022174268 | A | 22 November 2022 |
| | | | | JP | 2016015326 | A | 28 January 2016 |
| | | | | JP | 2013211262 | A | 10 October 2013 |
| | | | | JP | 5719859 | B2 | 20 May 2015 |
| | | | | JP | 2017188469 | A | 12 October 2017 |
| | | | | JP | 2019091723 | A | 13 June 2019 |
| US | 2015171380 | A1 | 18 June 2015 | JP | 2015115318 | A | 22 June 2015 |
| | | | | JP | 6526403 | B2 | 05 June 2019 |
| | | | | EP | 2884558 | A2 | 17 June 2015 |
| | | | | EP | 2884558 | A3 | 16 September 2015 |
| | | | | EP | 2884558 | B1 | 31 January 2018 |
| | | | | KR | 20150068759 | A | 22 June 2015 |
| | | | | US | 9847515 | B2 | 19 December 2017 |
| | | | | KR | 20150089991 | A | 05 August 2015 |
| | | | | KR | 101627629 | B1 | 07 June 2016 |